(19) Europäisches Patentamt
European Patent Office
Office européen des brevets

(11) **EP 1 302 578 B1**

(12) **EUROPEAN PATENT SPECIFICATION**

(45) Date of publication and mention
of the grant of the patent:
**07.03.2007 Bulletin 2007/10**

(51) Int Cl.:
***D03D 15/08*** *(2006.01)*   ***D04B 21/18*** *(2006.01)*

(21) Application number: **02022452.3**

(22) Date of filing: **04.10.2002**

(54) **Elastic woven or knitted fabric, and cushioning material and seat using the same**

Elastisches gewebtes oder gestricktes Material, und Polstermaterial und Sitze, die dieses verwenden

Tissu ou tricot élastique et matériau de rembourrage et siège l'utilisant

(84) Designated Contracting States:
**AT BE BG CH CY CZ DE DK EE ES FI FR GB GR IE IT LI LU MC NL PT SE SK TR**

(30) Priority: **05.10.2001 JP 2001310390**
**05.10.2001 JP 2001310391**
**05.10.2001 JP 2001310392**

(43) Date of publication of application:
**16.04.2003 Bulletin 2003/16**

(73) Proprietor: **Toyo Boseki Kabushiki Kaisha Osaka-shi, Osaka-fu (JP)**

(72) Inventors:
• **Oka, Tetsushi**
**2-chome**
**Otsu-shi,**
**Shiga-ken (JP)**
• **Ohta, Yasuo**
**2-chome**
**Otsu-shi,**
**Shiga-ken (JP)**
• **Oda, Syouji**
**2-chome**
**Otsu-shi,**
**Shiga-ken (JP)**

(74) Representative: **Vossius & Partner**
**Siebertstrasse 4**
**81675 München (DE)**

(56) References cited:
**EP-A- 0 939 154      WO-A-98/29587**
**US-A- 5 807 794**

• **PATENT ABSTRACTS OF JAPAN vol. 2000, no. 03, 30 March 2000 (2000-03-30) & JP 11 350297 A (TOYOBO CO LTD; TS TECH CO LTD), 21 December 1999 (1999-12-21)**
• **PATENT ABSTRACTS OF JAPAN vol. 2000, no. 09, 13 October 2000 (2000-10-13) & JP 2000 160453 A (TOYOBO CO LTD), 13 June 2000 (2000-06-13)**

**Description**

The present invention relates to a woven or knitted fabric having excellent strength and elastic recoverability or a pleasant air permeability, to a cushioning material and a seat using the woven or knitted fabric. The present invention further relates to a method of manufacturing the woven or knitted fabric.

Urethane foam, polyester fiber wadding, resin cotton or solid cotton having polyester fibers bonded thereto, and so on have conventionally been used as cushioning materials for furniture such as chairs, beds, seats for transportation machinery such as automobiles and trains, and so on. JP-A-11/350297 discloses a certain woven fabric for an automobile seat. To obtain pleasant properties as a cushion, many materials used are devised in various ways, for example by combining materials having different cushioning abilities to one another, or by adopting a duplex structure when forming the cushion. However, all of these cushioning materials have had problems such as being bulky or it being impossible to obtain a material having a good cushioning ability with a small volume.

Moreover, the air permeability greatly influences the comfort when seated, but with conventional cushioning materials such as urethane foam, polyester fiber wadding, and resin cotton or hard cotton having polyester fibers bonded thereto, there has been a limit to how much the air permeability can be increased.

From these viewpoints, there are calls for the development of a material that has excellent cushioning ability with space-saving, or a material with added comfort.

It is an object of the present invention to provide an elastic woven or knitted fabric, in particular an elastic woven or knitted fabric for a seat that can be used as a cushioning material that has excellent cushioning ability and permanent set resistance, is space-saving, and has excellent air permeability.

The present invention provides the following.

1. An elastic woven or knitted fabric that has an elastic yarn comprising an aromatic polyester having an aromatic carboxylic acid and a glycol as principal raw materials, the aromatic polyester being disposed in at least part of the elastic yarn, and has the following physical properties:

(1) a stress at 10% elongation in a range of 100 to 600N per 5cm width in at least one of a warp direction and a weft direction, and an elongation recovery factor at 15% elongation of at least 75% in the same direction;
(2) a ratio ST1/ST2 of not more than 5, where ST1 is the stress at 10% elongation in one of the warp and weft directions, and ST2 is the stress at 10% elongation in the other one of the warp and weft directions, with the proviso that ST1≥ST2; and
(3) a dry heat shrinkage factor at 180°C in a range of 1.0% to 10% in each of the warp direction and the weft direction.

2. The elastic woven or knitted fabric according to 1 above further having the following physical property:

(4) an air permeability upon passing through air at a pressure of 125Pa in a range of 100 to 700cc/cm$^2$·sec.

3. The elastic woven or knitted fabric according to 1 or 2 above, the elastic yarn comprising at least two polyether-ester-based elastomers having melting points differing by at least 30°C, wherein the melting point of the polyether-ester-based elastomer having a lower melting point is at least 100 °C.

4. The elastic woven or knitted fabric according to any of 1 to 3 above, wherein the breaking strength is at least 250N per 5cm width in each of the warp direction and the weft direction.

5. The elastic woven or knitted fabric according to any of 1 to 4 above, wherein the sliding resistance of the elastic yarn comprising the organic synthetic macromolecule is at least 2N.

6. The elastic woven or knitted fabric according to any of 1 to 5 above, wherein the elastic yarn comprising the organic synthetic macromolecule is a monofilament.

7. A method of manufacturing an elastic woven or knitted fabric, comprising the steps of:

carrying out knitting or weaving disposing in at least part an elastic yarn comprising at least two polyether-ester-based elastomers having different melting points to one another to obtain a woven or knitted fabric; and
then carrying out heat treatment of the woven or knitted fabric at a temperature at which a low-melting-point polyether-ester-based elastomer component softens or melts,

wherein the overfeed factor and width variation factor are set in the following ranges:

$$1.5 \leq ((SH1) - (\text{overfeed factor})) \leq 15$$

$$1.5 \leq ((SH2) - (\text{width variation factor})) \leq 15$$

wherein SH1 represents the dry heat shrinkage factor at 180°C in the warp direction when the woven or knitted fabric is unconstrained and SH2 represents the dry heat shrinkage factor at 180°C in the weft direction when the woven or knitted fabric is unconstrained;

whereby a woven or knitted fabric having the following physical properties is obtained:

(1) a stress at 10% elongation in a range of 100 to 600N per 5cm width, and an elongation recovery factor at 15% elongation of at least 75%, in at least one of a warp direction and a weft direction;

(2) a ratio ST1/ST2 of not more than 5, wherein ST1 is the stress at 10% elongation in one of the warp and weft directions, and ST2 is the stress at 10% elongation in the other one of the warp and weft directions, with the proviso that ST1≥ST2; and

(3) a dry heat shrinkage factor at 180°C in a range of 1.0% to 10% in each of the warp and weft directions.

8. The method of manufacturing an elastic woven or knitted fabric according to 7 above, wherein a low-melting-point polyether-ester-based elastomer resin fuses and hardens through the heat treatment at parts of the woven or knitted fabric where the yarns intersect.

9. The method of manufacturing an elastic woven or knitted fabric according to 7 or 8 above, wherein the content in the woven or knitted fabric of the elastic yarn comprising the polyether-ester-based elastomers is at least 25wt%.

10. The method of manufacturing an elastic woven or knitted fabric according to any of 7 to 9 above, wherein the elastic yarn comprising the polyether-ester-based elastomers has a core-sheath structure, and the melting point of a core component polyether-ester-based elastomer is at least 30°C higher than the melting point of a sheath component polyether-ester-based elastomer.

11. The method of manufacturing an elastic woven or knitted fabric according to 10 above, wherein the weight ratio of the core component to the sheath component is in a range of 95:5 to 30:70.

12. A seat cushioning material that uses the elastic woven or knitted fabric according to any of 1 to 6 above.

13. A seat that uses the cushioning material according to 12 above.

The cushioning material here is a component used in any of various applications that utilize the cushioning properties thereof; there are no particular limitations on the method of using the cushioning material. For example, the cushioning material can be used in the seat and/or the back of an office chair, whereby the cushioning material alone gives a cushioning function, or the cushioning material can be used as part of a chair structure, combined, for example, with urethane foam, polyester fiber wadding, resin cotton or hard cotton having polyester fibers bonded thereto, or springs. Moreover, the cushioning material can be used combined with a separate designed fabric on the surface thereof.

Examples of specific applications of the elastic woven or knitted fabric and the cushioning material are office chairs, household chairs, seats for transportation machinery such as automobiles and trains, wheelchair seats, child seats, nursing chairs, bench seats, and folding chairs; however, the present invention is not limited to these.

The elastic yarn used in the elastic woven or knitted fabric of the present invention comprises an aromatic polyester, for which an aromatic carboxylic acid and a glycol are used as principal raw materials, to obtain the strength, ability to recover after elongation and so on required of a woven or knitted fabric for seats. Furthermore, a polyester elastic yarn obtained by copolymerizing polybutylene terephthalate and polytetramethylene glycol is preferable, since the ability to recover after elongation is good.

The elastic yarn must be used in at least part of the woven or knitted fabric of the present invention in the warp and/or the weft direction. By using the elastic yarn, the ability to recover after elongation is kept good.

It is advantageous to use an elastic yarn comprising at least two polyether-ester-based elastomers having different melting points to one another as the elastic yarn in the present invention, since in this case, through carrying out heat treatment, a polyether-ester-based elastomer having a low melting point melts and resolidifies, whereby it becomes possible to carry out yarn fixing at points of intersection in the woven or knitted fabric, with the elastic modulus of a polyether-ester-based elastomer having a high melting point being maintained as is. Moreover, when the heat treatment has been carried out on the elastic yarn comprising polyether-ester-based elastomers having different melting points to one another, because the low-melting-point polyether-ester-based elastomer, which is flexible and has excellent elastic recoverability, fuses and solidifies at points of intersection between the warp and the weft in the case of a woven fabric or points of intersection between the yarns constituting the fabric in the case of a knitted fabric, strong yarn fixing can be obtained without there being a deterioration of the strength, elastic recovery factor and so on of the woven or knitted fabric.

The melting point of the low-melting-point polyether-ester-based elastomer is preferably at least 100°C from the viewpoint of spinning ability and knitting/weaving ability, and is preferably at least 30°C lower than the melting point of the high-melting-point polyether-ester-based elastomer from the viewpoint of the purpose of using the elastic yarn. Moreover, the ratio of usage of the high-melting-point polyether-ester-based elastomer to the low-melting-point polyether-ester-based elastomer can be chosen as deemed appropriate, but for practical reasons is preferably in a range of 95:5 to 30:70, more preferably in a range of 90:10 to 60:40, as a weight ratio. Furthermore, the heat treatment is preferably carried out at a temperature between a temperature 10°C below the melting point of the high-melting-point elastic yarn and a temperature 10°C above the melting point of the low-melting-point elastic yarn. By carrying out such heat treatment on the woven or knitted fabric, the elastic yarn can be sufficiently bonded to other yarns in contact therewith in the woven or knitted fabric. It goes without saying that the melting point of the polyester yarn used in the woven or knitted fabric must be at least as high as the melting point of the high-melting-point polyether-ester-based elastic yarn.

In the present invention, the elastic yarn can be used in either the warp direction or the weft direction of the woven or knitted fabric, but from the viewpoint of knitting/weaving ability and the product quality of the woven or knitted fabric, is preferably used in the weft direction. Moreover, the knit/weave can be selected from various knits/weaves such as warp knit (single raschel, double raschel, tricot), weft knit, plain weave, twill weave, satin weave, and leno weave, although the present invention is not limited to these.

It is particularly preferable for the elastic yarn in the present invention to be a monofilament yarn. There will be no problems with the mechanical properties such as the ability to recover after elongation even if the elastic yarn is a multifilament yarn, but the durability may be poor due to the resistance to friction being low. The fineness of the monofilament yarn is preferably between 100dtex and 6000dtex. At below 100dtex, the resistance to friction will be low and it may not be possible to obtain sufficient durability, whereas at above 6000dtex, handling during manufacture of the woven or knitted fabric will become difficult. A more preferable range for the fineness is from 300dtex to 3000dtex. Moreover, a multifilament yarn with single filaments of fineness at least 100dtex can be used.

A polyester yarn, a polyamide yarn, a polyolefin yarn or the like can be used together with the elastic yarn as the yarn other than the elastic yarn in the present invention, and regarding these yarns, an unprocessed yarn may be used, or a processed yarn such as a loop yarn or a false twist yarn may be used, or both may be used mixed together. Moreover, the yarn used can be a spun-dyed yarn or a fiber-dyed yarn. In the case that a polyester-based elastomer yarn is used as the elastic yarn, and a polyester yarn is used as the yarn used together with the elastic yarn, the yarns constituting the woven or knitted fabric all become polyester-based, which is preferable in that recycling becomes easy.

The sliding resistance of the elastic yarn in the woven or knitted fabric of the present invention is an important physical property as a seat cushioning material. It is preferable for the value thereof to be at least 2N. If the sliding resistance is less than 2N, then yarn slippage and fraying will occur, which is undesirable. The sliding resistance is more preferably at least 5N, yet more preferably at least 10N.

The breaking strength in each of the warp direction and the weft direction of the woven or knitted fabric of the present invention is also an important physical property as a seat cushioning material. It is preferable for the value thereof to be at least 250N per 5cm width. If the breaking strength is less than 250N per 5cm width, then the woven or knitted fabric may break through the load to which the surface is subjected during use as a cushioning material, which is undesirable. The breaking strength is more preferably at least 350N per 5cm width.

The stress at 10% elongation in at least one of the warp direction and the weft direction of the woven or knitted fabric of the present invention is in a range of 100 to 600N per 5cm width, preferably in a range of 150 to 400N per 5cm width. At less than 100N per 5cm width, the sinking amount during use as a cushioning material will be large, and during use as a seat in particular there will be discomfort when seated. On the other hand, at above 600N per 5cm width, the sinking amount when used as a seat will be too low, and hence aching will arise while seated, and thus it will not be possible to tolerate prolonged usage.

Moreover, the elongation recovery factor after 15% elongation in the same direction as above is at least 75%, preferably at least 80%. The elongation recovery factor here is measured as follows. A strip of width 5cm is cut out from the woven or knitted fabric, and using a constant extension rate type testing machine, the sample is elongated by 15% with a gripping interval of 20cm and a pulling rate of 20cm/min, then the load is released rapidly, and then once the sample has returned to its original length, the sample is once again elongated rapidly. The gripping interval when the stress rises during this second elongation is read, and the elongation recovery factor is calculated from the following formula.

$$((L2-L1)/(L1 \times 0.15)) \times 100(\%)$$

Here, L1 is the initial gripping interval (=20cm), and L2 is the gripping interval when the stress rises during the second elongation.

If the elongation recovery factor determined in this way is less than 75%, then wrinkles will arise during use as a cushioning material, which is unsuitable from the perspective of the external appearance and the feeling when seated.

Moreover, it is important that the dry heat shrinkage factor at 180°C be in a range of 1.0% to 10% in each of the warp direction and the weft direction of the woven or knitted fabric. When the elastic woven or knitted fabric of the present invention is made into a product, wrinkles can be removed through heat treatment by utilizing the shrinkage properties, and if the dry heat shrinkage factor is less than 1.0% then it will not be possible to remove wrinkles sufficiently when making into a product as a cushioning material. Moreover, if the dry heat shrinkage factor is greater than 15%, then the dimensional stability will be poor, leading to problems in handling in subsequent manufacturing steps. The dry heat shrinkage factor is preferably in a range of 2.0 to 10%.

Moreover, the air permeability when passing air through a sample of the woven or knitted fabric of the present invention at a pressure of 125Pa is preferably in a range of 100 to 700cc/cm$^2$·sec. When used as a cushioning material, if the air permeability is less than 100cc/cm$^2$·sec, then a feeling of stickiness will be prone to arising upon sitting for a prolonged time, and moreover once the cushioning material has become damp it will not dry easily, and hence there will be a problem from the perspective of hygiene. On the other hand, if the air permeability is greater than 700cc/cm$^2$·sec, then the flow of air will be prone to becoming too great, and hence there will be a problem from the perspective of warmth retention. A more preferable range for the air permeability is 150 to 400cc/cm$^2$·sec.

Moreover, the ratio ST1/ST2 is not more than 5, preferably not more than 3, wherein ST1 is the stress at 10% elongation in one of the warp and weft directions, and ST2 is the stress at 10% elongation in the other one of the warp and weft directions, with the proviso that ST1≥ST2.

This is because if ST1/ST2 is greater than 5, then one of the warp yarn and the weft yarn will be subjected to an excessive load, and hence permanent set in fatigue will arise in the yarn subjected to the excessive load, and thus there will be a large drop in performance.

If it is necessary to make the woven or knitted fabric of the present invention fire-retardant and light-resistant, then yarns containing a fire retardant and a light resistance agent can be used, or else a fire retardant and a light resistance agent can be applied to the woven or knitted fabric. With regard to making the elastic yarn fire-retardant, known methods include mixing melamine cyanurate into the raw material resin, and applying a phosphorus compound, but there is no particular limitation to these. Moreover, regarding a light resistance agent, light resistance treatment can be carried out by adding carbon black or the like, but there is no particular limitation to this.

If it is necessary to make the elastic yarn used in the woven or knitted fabric of the present invention colored or mat, then dyes, pigments, inorganic particles and so on may be included. Regarding pigments and inorganic particles, a phthalocyanine-based organic pigment, carbon black, titanium oxide, silica, zinc oxide and so on can be added, but there is no particular limitation to these. By using a spun-dyed yarn containing a pigment, the effort of dying at a later stage can be dispensed with.

Next, a description will be given of an example of the manufacture of the woven or knitted fabric of the present invention. To obtain a novel woven or knitted fabric in this way, it is recommended that manufacturing be carried out carefully under optimum conditions.

In the present invention, heat treatment is carried out as means for fixing together the yarns at points of intersection in the woven or knitted fabric, and by optimizing the conditions of the heat treatment, the shrinkage factor of the product can be controlled. There are no particular limitations on the equipment used for carrying out the heat treatment, provided the equipment is such that the woven or knitted fabric can be heated while constraining shrinkage in the warp and weft directions by some method; nevertheless, it is preferable to use equipment such that both edges of the woven or knitted fabric can be fastened using pins or clips. During the heat treatment, to control the shrinkage factor in the warp direction of the woven or knitted fabric, it is important to set the overfeed factor to the optimum value. The overfeed factor must be set in accordance with the shrinkage factor in the warp direction in the case of heating the woven or knitted fabric in an unconstrained state, and in the method of the present invention the overfeed factor is made to be in the following range.

$$1.5 \leq ((SH1)-(\text{overfeed factor})) \leq 15$$

Here, SH1 represents the dry heat shrinkage factor at 180°C in the warp direction when the woven or knitted fabric is unconstrained.

The overfeed factor is calculated using the following formula from the feeding rate at the inlet part of the heat treatment equipment and the take-up rate at the take-up part of the heat treatment equipment for when the woven or knitted fabric is put into the heat treatment equipment.

$$\texttt{Overfeed factor = 100 × (V1-V2)/V1}$$

Here, V1 represents the feeding rate at the inlet part of the heat treatment equipment, and V2 represents the take-up rate at the take-up part of the heat treatment equipment.

Moreover, it is necessary to control the width variation factor in the weft direction of the woven fabric. The width variation factor must be set in accordance with the shrinkage factor in the weft direction in the case of heating the woven or knitted fabric in an unconstrained state, and is made to be in the following range.

$$\texttt{1.5 ≤ ((SH2)-(width variation factor)) ≤ 15}$$

Here, SH2 represents the dry heat shrinkage factor at 180°C in the weft direction when the woven or knitted fabric is unconstrained.

The width variation factor is calculated using the following formula from the width between the fixed edges at the inlet part of the heat treatment equipment and the width between the fixed edges at the outlet part of the heat treatment equipment for when the woven or knitted fabric is put into the heat treatment equipment.

$$\texttt{Width variation factor = 100 × (W1-W2)/W1}$$

Here, W1 represents the width between the fixed edges at the inlet part of the heat treatment equipment, and W2 represents the width between the fixed edges at the outlet part of the heat treatment equipment.

Office chairs, automobile seats, train seats, nursing chairs, child seats, wheelchairs, folding chairs and bench seats that use the elastic woven or knitted fabric according to the present invention as a cushioning material have various advantages, for example the air permeability is excellent, weight reduction is possible, and the thickness can be reduced and hence the chair or seat can be made compact, and thus novel design is possible.

Following is a description of the present invention through examples. However, the present invention is not limited by these examples. The measurement methods used in the examples are as follows.

Strength and elongation for raw yarn

Measurements were carried out in accordance with JIS L 1013 using a constant extension rate type testing machine with a gripping interval of 100mm and a pulling rate of 100mm/min.

Shrinkage factor for raw yarn

The raw yarn was put into a drying oven at 180°C in an unconstrained state and dry heat treatment was carried out for 30 minutes, and then the shrinkage factor was calculated using the following formula.

$$\texttt{((L1-L2)/(L1)) × 100(\%)}$$

Here, L1 is the length of the sample before the heat treatment (=30cm), and L2 is the length of the sample after the heat treatment.

Strength and elongation for woven fabric and stress at 10% elongation

Measurements were carried out in accordance with JIS L 1096 using a constant extension rate type testing machine with a gripping interval of 200mm, a test piece width of 50mm, and a pulling rate of 100mm/min.

Elongation recovery factor

A strip of width 5cm is cut out from the woven or knitted fabric, and using a constant extension rate type testing machine, the sample is elongated by 15% with a gripping interval of 20cm and a pulling rate of 20cm/min, then the load is released rapidly, and then once the sample has returned to its original length, the sample is once again elongated rapidly. The gripping interval when the stress rises during this second elongation is read, and the elongation recovery factor is calculated from the following formula.

$$((L4-L3)/(L3\times0.15)) \times 100(\%)$$

Here, L3 is the initial gripping interval (=20cm), and L4 is the gripping interval when the stress rises during the second elongation.

Dry heat shrinkage factor

Strips of width 1cm and length 20cm are cut out from the woven or knitted fabric in each of the warp direction and the weft direction, the strips are put into a drying oven at 180°C and dry heat treatment is carried out for 30 minutes, and then the dry heat shrinkage factor is calculated from the following formula.

$$((L5-L6)/(L5)) \times 100(\%)$$

Here, L5 is the length of the sample before the heat treatment (=20cm), and L6 is the length of the sample after the heat treatment.

Sitting performance

The woven or knitted fabric was fastened in a horizontal plane into a 40cm-square iron frame, a 65kg load was applied to the center of the woven or knitted fabric using a loading plate having a bottom face of diameter 20cm, and the sinking amount of the loading plate relative to the horizontal plane before the application of the load was measured.
Ten monitors were asked to sit on a model chair made by fastening the woven or knitted fabric into a 40cm-square frame, and judge the feeling. Each person evaluated the comfort when seated as described below, and overall judgement was carried out by taking the average of the evaluation results. Evaluation: Comfort when seated is good: A; comfort when seated is normal: B; comfort when seated is poor: D.
Moreover, the seat of the model chair was visually observed immediately after the evaluation of the comfort when seated, and the recovery from wrinkles was judged as described below. As with the comfort when seated, overall judgement was carried out by taking the average of the judgement results for the ten people.
Evaluation : No wrinkles: A; slight wrinkles: B; wrinkles clearly remain: D

Fraying = yarn fixing ability

The sliding resistance was measured by the yarn extraction method A in accordance with JIS L 1096. The measurements were carried out using a constant extension rate type testing machine with a gripping interval of 30mm, a test piece width of 20mm, and a pulling rate of 30mm/min.

Air permeability

The amount of air passing through the test piece when the differential pressure was 125Pa was measured using a fragile type testing machine in accordance with JIS L 1096 (air permeability, A method, fragile type method).

Feeling of stickiness

Ten monitors were asked to sit on a model chair made by fastening the sample into a 40cm-square frame, and judge the feeling of stickiness. The feeling of stickiness was judged as described below after sitting for 1 hour in a room at 28°C and 75% RH, and overall judgement was carried out by taking the average of the judgement results.
Evaluation : Pleasant, with no feeling of stickiness: A; no feeling of stickiness, but lack of warmth retention: B; stickiness felt: C.

Example 1A

A woven fabric of plain weave was produced using a 2080 dtex elastic yarn at a density of 20 yarns per inch as the weft, and a 830dtex polyester multifilament yarn at a density of 28 yarns per inch as the warp; the elastic yarn had a polyether-ester-based elastomer of melting point 222°C as a core component, and a polyether-ester-based elastomer of melting point 182°C as a sheath component, with the weight ratio of the core to the sheath being 80:20. The dry heat shrinkage factor of the woven fabric upon heating in an unconstrained state was 8.0% in the warp direction and 15% in the weft direction. The woven fabric was thus subjected to dry heat treatment at 200°C for 1 minute with the overfeed factor being set to 3.0% and the width variation factor being set to 13%.
It was verified that in the woven fabric after the heat treatment the low-melting-point polyether-ester-based elastomer had bonded and solidified at parts where the warp and the weft intersect in the woven fabric.
Moreover, the dry heat shrinkage factor of the woven fabric was measured after carrying out the heat treatment, and was found to be 5.0% in the warp direction and 2.0% in the weft direction. The woven fabric was fastened into a 40cm×40cm frame, and heat setting was carried out in this state at 195°C. The cushioning material thus obtained had no wrinkles and had excellent dimensional stability.
Moreover, an office chair was manufactured using the cushioning material, whereupon the feeling when seated was extremely good, and there were no wrinkles after sitting; the cushioning material could thus be satisfactorily used as a seat cushioning material for office chairs, household chairs, seats for automobiles or trains, and so on. The details of the yarns, the physical properties of the woven fabric, and the performance are shown in Table 1.

Example 2A

Testing was carried out as in Example 1A, except that the weave of the woven fabric was made to be a 2/1 twill weave. The dry heat shrinkage factor when the woven fabric was heated in an unconstrained state before carrying out heat treatment was 8.2% in the warp direction and 15.2% in the weft direction. The dry heat shrinkage factor of the woven fabric after carrying out the heat treatment was 5.2% in the warp direction and 2.2% in the weft direction. The woven fabric was fastened into a 40cm×40cm frame, and heat setting was carried out in this state at 195°C. The cushioning material thus obtained had no wrinkles and had excellent dimensional stability.
Moreover, an office chair was manufactured using the cushioning material, whereupon the feeling when seated was extremely good, and there were no wrinkles after sitting; the cushioning material could thus be satisfactorily used as a seat cushioning material for office chairs, seats for automobiles or trains, and so on. The details of the yarns, the physical properties of the woven fabric, and the performance are shown in Table 1.

Example 3A

Testing was carried out as in Example 2A, except that the density of the warp in the woven fabric was made to be 36 yarns per inch and the density of the weft was made to be 15 yarns per inch. The dry heat shrinkage factor when the woven fabric was heated in an unconstrained state before carrying out heat treatment was 8.3% in the warp direction and 15.3% in the weft direction. The dry heat shrinkage factor of the woven fabric after carrying out the heat treatment was measured to be 5.3% in the warp direction and 2.3% in the weft direction. The woven fabric was fastened into a 40cmx40cm frame, and heat setting was carried out in this state at 195°C. The cushioning material thus obtained had no wrinkles and had excellent dimensional stability.
Moreover, an office chair was manufactured using the cushioning material, whereupon the feeling when seated was extremely good, and there were no wrinkles after sitting; the cushioning material could thus be satisfactorily used as a seat cushioning material for office chairs, household chairs, seats for automobiles or trains, and so on. The details of the yarns, the physical properties of the woven fabric, and the performance are shown in Table 1.

Example 4A

Chairs were manufactured by using the woven fabrics of Examples 1A to 3A as seats, and integrally molding

## EP 1 302 578 B1

with a polyester resin seat frame and backrest using an approximately quadrangular mold surrounded on all four sides. The chairs manufactured were light and easily carried. Moreover, comparing with a conventional chair in which urethane is used for both the seat and the back, it was found that due to the lack of thickness, sufficient seating space could be obtained even in a cramped indoor environment. Furthermore, the feeling when seated was extremely pleasant, with there being a suitable degree of sinking, and with there being no feeling of stickiness even during use in a high-temperature, high-humidity environment; it was found that the elastic woven fabrics according to the present invention have an excellent performance as a chair-covering fabric or a cushioning material, and moreover that seats using these elastic woven fabrics can be used with office chairs or seats for transportation machinery such as automobiles and trains.

Comparative Example 1A

A plain woven fabric was produced using 830dtex polyester at a density of 28 yarns per inch as both the warp and the weft, and testing was carried out as in Example 1A. The dry heat shrinkage factor when the woven fabric was heated in an unconstrained state before carrying out heat treatment was 8.5% in the warp direction and 8.5% in the weft direction, and during the heat treatment the overfeed factor was made to be 2.5% and the width variation factor was made to be 2.5%. The dry heat shrinkage factor of the woven fabric after carrying out the heat treatment was measured to be 6.0% in the warp direction and 6.0% in the weft direction. The woven fabric was fastened into a 40cm×40cm frame, and heat setting was carried out in this state at 195°C. The cushioning material thus obtained had no wrinkles and had excellent dimensional stability.

However, when an office chair was manufactured using this cushioning material, regarding the sitting performance, the feeling was extremely poor, possibly because the sinking amount was extremely low, and moreover there were wrinkles in the fabric after sitting; the cushioning material was thus unsuitable as a seat cushioning material for office chairs, household chairs, seats for automobiles or trains, and so on. The details of the yarns, the physical properties of the woven fabric, and the performance are shown in Table 1.

Comparative Example 2A

Testing was carried out as in Example 1A, except that during the heat treatment after producing the woven fabric, the overfeed factor was made to be 7.0% and the width variation factor was made to be 14.2%. The dry heat shrinkage factor of the woven fabric after carrying out the heat treatment was measured to be 1.0% in the warp direction and 0.8% in the weft direction. The woven fabric was fastened into a 40cm×40cm frame, and heat setting was carried out in this state at 195°C. However, wrinkles remained in the cushioning material obtained. Moreover, when an office chair was manufactured using the cushioning material, it was found that the level was not sufficient for use as a cushioning material from the viewpoint of the external appearance product quality due to wrinkles clearly remaining.

Comparative Example 3A

Testing was carried out as in Example 1A, but using a high shrinkage type elastic yarn as the weft, and a high shrinkage type polyester multifilament yarn as the warp. The dry heat shrinkage factor of the woven fabric in an unconstrained state before carrying out the heat treatment was 25% in the warp direction and 32% in the weft direction. Moreover, the conditions during the heat treatment were made to be an overfeed factor of 7.0% and a width variation factor of 15%. The dry heat shrinkage factor of the woven fabric after carrying out the heat treatment was measured to be 18% in the warp direction and 17% in the weft direction. The woven fabric was fastened into a 40cmx40cm frame, and heat setting was carried out in this state at 195°C. Wrinkles did not remain in the cushioning material obtained, but because the shrinkage factor was too high, the dimensions of the product could not be controlled, and hence it was found that the level was not sufficient for use as a cushioning material.

Comparative Example 4A

Testing was carried out as in Example 1A, except that the density of the warp in the woven fabric was made to be 32 yarns per inch and the density of the weft was made to be 10 yarns per inch. The dry heat shrinkage factor when the woven fabric was heated in an unconstrained state before carrying out heat treatment was 8.0% in the warp direction and 15% in the weft direction.

Moreover, the dry heat shrinkage factor of the woven fabric after carrying out the heat treatment was measured to be 5.0% in the warp direction and 2.0% in the weft direction. The woven fabric was fastened into a 40cm×40cm frame, and heat setting was carried out in this state at 195°C. The cushioning material thus obtained had no wrinkles and had excellent dimensional stability.

However, when an office chair was manufactured using the cushioning material, the feeling was normal, possibly because the sinking amount during sitting was somewhat high, but wrinkles clearly remained after sitting. The cushioning material was thus unsuitable as a seat cushioning material for office chairs, household chairs, seats for automobiles or trains, and so on. The details of the yarns, the physical properties of the woven fabric, and the performance are shown in Table 1.

The following were found from the results for the examples and the comparative examples. The woven fabric in each of Examples 1A to 3A was a woven fabric that uses an elastic yarn comprising two polyether-ester-based elastomers having different melting points to one another as the weft and a polyester yarn as the warp, and for which yarn fixing was carried out by carrying out dry heat treatment, and was designed such that the stress at 10% elongation is in a range of 100 to 600N per 5cm width in at least one of the warp direction and the weft direction and the elongation recovery factor at 15% elongation is at least 75% in the same direction, the dry heat shrinkage factor of the woven fabric at 180°C is in a range of 1.0% to 15% in both the warp direction and the weft direction, and ST1/ST2 is not more than 5. These fabrics used in the examples had a suitable hardness and sinking amount, and the elongation recoverability was satisfactory. Moreover, there was sliding resistance, there was no fraying or yarn slippage, and the feeling when seated was excellent, and hence these woven fabrics satisfied all of the properties required of a cushioning material.

With Comparative Example 1A, a polyester yarn was used as both the warp and the weft, and hence the stress at 10% elongation exceeded 600N per 5cm width in both the warp direction and the weft direction. The sinking amount for this fabric was extremely low, and hence the feeling was extremely poor. Moreover, wrinkles arose while sitting, and hence it was found that the fabric is unsuitable as a cushioning material.

With Comparative Example 2A, the dry heat shrinkage factor of the woven fabric at 180°C was less than 1.0%, and hence when producing the product, wrinkles could not be sufficiently removed even when heat treatment was carried out as a final manufacturing step; it was thus found that the fabric was unsuitable as a cushioning material from the viewpoint of external appearance product quality.

With Comparative Example 3A, the dry heat shrinkage factor of the woven fabric at 180°C was greater than 15%, and hence when producing the product, the shrinkage factor was too high upon carrying out heat treatment as a final manufacturing step, and thus the product dimensions could not be controlled; it was thus found that the fabric was unsuitable as a cushioning material.

As with the examples, the woven fabric of Comparative Example 4A was a woven fabric that uses an elastic yarn comprising two polyether-ester-based elastomers having different melting points to one another as the weft and a polyester yarn as the warp, and for which yarn fixing was carried out by carrying out dry heat treatment, but was designed such that ST1/ST2 was greater than 5. The sinking amount for this fabric was somewhat high, and the comfort when seated was normal. However, wrinkles arose while sitting, and hence it was found that the fabric was unsuitable as a cushioning material.

Table 1

|  |  | Example 1A | Example 2A | Example 3A | Comparative Example 1A | Comparative Example 2A | Comparative Example 3A | Comparative Example 4A |
|---|---|---|---|---|---|---|---|---|
| Warp | Type | Polyester yarn | Polyester yarn | Polyester yarn | Polyester yarn | Polyester yarn | Polyester yarn | Polyester yarn |
|  | Fineness (dtex) | 830 | 830 | 830 | 830 | 830 | 830 | 830 |
|  | Number of filaments | 96 | 96 | 96 | 96 | 96 | 96 | 96 |
|  | Strength (cN/dtex) | 7.5 | 7.5 | 7.5 | 7.5 | 7.5 | 7.3 | 7.5 |
|  | Elongation (%) | 20 | 20 | 20 | 20 | 20 | 18 | 20 |
|  | Shrinkage factor (%) | 8.6 | 8.6 | 8.6 | 8.6 | 8.6 | 25 | 8.6 |
| Weft | Type | Polyether-ester-based elastic yarn | Polyether-ester-based elastic yarn | Polyether-ester-based elastic yarn | Polyester yarn | Polyether-ester-based elastic yarn | Polyether-ester-based elastic yarn | Polyether-ester-based elastic yarn |
|  | Composite structure | Core-sheath (80:20) | Core-sheath (80:20) | Core-sheath (80:20) | None | Core-sheath (80:20) | Core-sheath (80:20) | Core-sheath (80:20) |
|  | Fineness (dtex) | 2080 | 2080 | 2080 | 830 | 2080 | 2080 | 2080 |
|  | Number of filaments | 1 | 1 | 1 | 96 | 1 | 1 | 1 |
|  | Strength (cN/dtex) | 2.1 | 2.1 | 2.1 | 7.5 | 2.1 | 2.1 | 2.1 |
|  | Elongation (%) | 120 | 120 | 120 | 20 | 120 | 120 | 120 |

EP 1 302 578 B1

Table 1 (continued)

| Woven fabric | | Example 1A | Example 2A | Example 3A | Comp. Ex. 1A | Comp. Ex. 2A | Comp. Ex. 3A | Comp. Ex. 4A |
|---|---|---|---|---|---|---|---|---|
| | Weave | Plain | 2/1 twill | 2/1 twill | Plain | Plain | Plain | Plain |
| Warp direction | Density (yarns per inch) | 28 | 28 | 36 | 28 | 28 | 28 | 32 |
| | Tensile strength (N/5cm) | 3020 | 3060 | 3890 | 3040 | 3010 | 3080 | 3420 |
| | Tensile elongation (%) | 40 | 43 | 42 | 40 | 40 | 40 | 40 |
| | Stress at 10% elongation (N per 5cm width) | 760 | 760 | 970 | 760 | 760 | 760 | 870 |
| | Elongation recovery factor (%) | 65 | 63 | 64 | 65 | 65 | 65 | 64 |
| | Shrinkage factor after heat treatment (%) | 5.0 | 5.2 | 5.3 | 6.0 | 1.0 | 18 | 5.1 |
| Weft direction | Density (yarns per inch) | 20 | 20 | 15 | 28 | 20 | 20 | 10 |
| | Tensile strength (N/5cm) | 1200 | 1200 | 930 | 3020 | 1200 | 1200 | 620 |
| | Tensile elongation (%) | 135 | 138 | 139 | 40 | 135 | 135 | 135 |
| | Stress at 10% elongation (N per 5cm width) | 300 | 300 | 230 | 760 | 300 | 300 | 150 |
| | Elongation recovery factor (%) | 85 | 84 | 85 | 65 | 85 | 85 | 84 |
| | Shrinkage factor after heat treatment (%) | 2.0 | 2.2 | 2.3 | 6.0 | 0.8 | 17 | 2.0 |
| ST1/ST2 | | 2.5 | 2.5 | 4.2 | 1.0 | 2.5 | 2.5 | 5.8 |
| Sliding resistance (N) | | 41 | 26 | 31 | 0.6 | 36 | 41 | 52 |

Table 1 (continued)

| | | Example 1A | Example 2A | Example 3A | Comparative Example 1A | Comparative Example 2A | Comparative Example 3A | Comparative Example 4A |
|---|---|---|---|---|---|---|---|---|
| Sitting | Sinking amount (mm) | 30 | 31 | 27 | 16 | 32 | | 40 |
| | Feeling | A | A | A | D | A | | B |
| | Recovery from wrinkles | A | A | A | D | D | | D |

EP 1 302 578 B1

Example 1B

A woven fabric of plain weave was produced using a 2080 dtex elastic yarn at a density of 20 yarns per inch as the weft, and a 830dtex polyester multifilament yarn at a density of 28 yarns per inch as the warp; the elastic yarn had a polyether-ester-based elastomer of melting point 222°C as a core component, and a polyether-ester-based elastomer of melting point 182°C as a sheath component, with the weight ratio of the core to the sheath being 80:20. Dry heat treatment was carried out on the woven fabric at 200°C for 1 minute.
It was verified that in the woven fabric after the heat treatment the low-melting-point polyether-ester-based elastomer had bonded and solidified at parts where the warp and the weft intersect in the woven fabric.
Moreover, the feeling when seated for the sample after the heat treatment was extremely good, and there were no wrinkles after sitting; the sample could thus be satisfactorily used as a seat cushioning material for office chairs, household chairs, seats for automobiles or trains, and so on. The details of the yarns, the physical properties of the woven fabric, and the performance are shown in Table 2.

Example 2B

Testing was carried out as in Example 1B, except that the weave of the woven fabric was made to be a 2/1 twill weave. The feeling when seated for the sample after the heat treatment was extremely good, and there were no wrinkles after sitting; the sample could thus be satisfactorily used as a seat cushioning material for office chairs, household chairs, seats for automobiles or trains, and so on. The details of the yarns, the physical properties of the woven fabric, and the performance are shown in Table 2.

Example 3B

Testing was carried out as in Example 2B, except that the density of the warp in the woven fabric was made to be 36 yarns per inch and the density of the weft was made to be 15 yarns per inch. The feeling when seated for the sample after the heat treatment was extremely good, and there were no wrinkles after sitting; the sample could thus be satisfactorily used as a seat cushioning material for office chairs, household chairs, seats for automobiles or trains, and so on. The details of the yarns, the physical properties of the woven fabric, and the performance are shown in Table 2.

Comparative Example 1B

Testing was carried out as in Example 1B, except that the density of the warp in the woven fabric was made to be 32 yarns per inch and the density of the weft was made to be 10 yarns per inch. For the sample after the heat treatment, the feeling was normal, possibly because the sinking amount during sitting was somewhat high, but wrinkles clearly remained after sitting. The sample was thus unsuitable as a seat cushioning material for office chairs, household chairs, seats for automobiles or trains, and so on. The details of the yarns, the physical properties of the woven fabric, and the performance are shown in Table 2.

Comparative Example 2B

A plain woven fabric was produced using 830dtex polyester at a density of 28 yarns per inch as both the warp and the weft, and testing was carried out as in Example 1B. The feeling when seated was extremely poor, possibly because the sinking amount was extremely low, and moreover there were wrinkles in the fabric after sitting; the fabric was thus unsuitable as a seat cushioning material for office chairs, household chairs, seats for automobiles or trains, and so on. The details of the yarns, the physical properties of the woven fabric, and the performance are shown in Table 2.

Comparative Example 3B

Testing was carried out as in Example 1B, except that the density of the warp in the woven fabric was made to be 15 yarns per inch and the density of the weft was made to be 12 yarns per inch. The feeling of the sample after the heat treatment was normal, possibly because the sinking amount during sitting was somewhat high, and there was sufficient recovery from wrinkles after sitting. However, even though the feeling was good, the air permeability was extremely high, which was not pleasant from the perspective of warmth retention. The details of the yarns, the physical properties of the woven fabric, and the performance are shown in Table 2.

Comparative Example 4B

Using a cushioning material comprising commercially sold urethane foam of thickness 50mm and density 60kg/m$^3$, evaluation was carried out of the sitting performance, the air permeability, and the feeling of stickiness. The feeling when seated and the recovery from wrinkles were good, but a feeling of stickiness arose during prolonged usage, which was unpleasant.

The following were found from the results for the examples and the comparative examples. The woven fabric in each of Examples 1B to 3B was a woven fabric that uses an elastic yarn comprising two polyether-ester-based elastomers having different melting points to one another as the weft and a polyester yarn as the warp, and for which yarn fixing was carried out by carrying out dry heat treatment, and was designed such that ST1/ST2 is not more than 5. These fabrics used in the examples had a suitable hardness and sinking amount, and the elongation recoverability was satisfactory. Moreover, there was sliding resistance, there was no fraying or yarn slippage, and the feeling when seated was excellent, and hence these woven fabrics satisfied all of the properties required of a cushioning material.

As with the examples, the woven fabric of Comparative Example 1B was a woven fabric that uses an elastic yarn comprising two polyether-ester-based elastomers having different melting points to one another as the weft and a polyester yarn as the warp, and for which yarn fixing was carried out by carrying out dry heat treatment, but was designed such that ST1/ST2 was greater than 5. The sinking amount for this fabric was somewhat high, and the feeling was not necessarily good. Moreover, wrinkles arose while sitting, and hence it was found that the fabric was unsuitable as a cushioning material.

With Comparative Example 2B, a polyester yarn was used as both the warp and the weft, and hence the stress at 10% elongation exceeded 600N per 5cm width in both the warp direction and the weft direction. The sinking amount for this fabric was extremely low, and hence the feeling was extremely poor. Moreover, wrinkles arose while sitting, and hence it was found that the fabric is unsuitable as a cushioning material.

As with the examples, the woven fabric of Comparative Example 3B was a woven fabric that uses an elastic yarn comprising two polyether-ester-based elastomers having different melting points to one another as the weft and a polyester yarn as the warp, and for which yarn fixing was carried out by carrying out dry heat treatment, but the air permeability was extremely high, possibly due to the weave density being extremely coarse, which was not pleasant from the perspective of warmth retention after sitting for a prolonged time.

For Comparative Example 4B, the cushioning material comprised commercially sold urethane foam; the general sitting performance was satisfactory, but the air permeability was extremely low, and hence a feeling of stickiness arose upon sitting for a prolonged time, which was unpleasant.

Table 2

| | | Example 1B | Example 2B | Example 3B | Comparative Example 1B | Comparative Example 2B | Comparative Example 3B | Comparative Example 4B |
|---|---|---|---|---|---|---|---|---|
| Warp | Type | Polyester yarn | Polyester yarn | Polyester yarn | Polyester yarn | Polyester yarn | Polyester yarn | |
| | Fineness (dtex) | 830 | 830 | 830 | 830 | 830 | 830 | |
| | Number of filaments | 96 | 96 | 96 | 96 | 96 | 96 | |
| | Strength (cN/dtex) | 7.5 | 7.5 | 7.5 | 7.5 | 7.5 | 7.5 | |
| | Elongation (%) | 20 | 20 | 20 | 20 | 20 | 20 | |
| Weft | Type | Polyether-ester-based elastic yarn | Polyether-ester-based elastic yarn | Polyether-ester-based elastic yarn | Polyether-ester-based elastic yarn | Polyester yarn | Polyether-ester-based elastic yarn | |
| | Composite structure | Core-sheath (80:20) | Core-sheath (80:20) | Core-sheath (80:20) | Core-sheath (80:20) | None | None | |
| | Fineness (dtex) | 2080 | 2080 | 2080 | 2080 | 830 | 2080 | |
| | Number of filaments | 1 | 1 | 1 | 1 | 96 | 1 | |
| | Strength (cN/dtex) | 2.1 | 2.1 | 2.1 | 2.1 | 7.5 | 2.1 | |
| | Elongation (%) | 120 | 120 | 120 | 120 | 20 | 1 | |

EP 1 302 578 B1

Table 2 (continued)

| | | | Example 1B | Example 2B | Example 3B | Comp. Ex. 1B | Comp. Ex. 2B | Comp. Ex. 3B | Comp. Ex. 4B |
|---|---|---|---|---|---|---|---|---|---|
| Woven fabric | Weave | | Plain | 2/1 twill | 2/1 twill | Plain | Plain | Plain | |
| | Warp direction | Density (yarns per inch) | 28 | 28 | 36 | 32 | 28 | 15 | |
| | | Tensile strength (N/5cm) | 3020 | 3010 | 3810 | 3400 | 3060 | 1640 | |
| | | Tensile elongation (%) | 40 | 43 | 42 | 40 | 40 | 40 | |
| | | Stress at 10% elongation (N per 5cm width) | 760 | 760 | 970 | 870 | 760 | 410 | |
| | | Elongation recovery factor (%) | 65 | 63 | 64 | 64 | 65 | 65 | |
| | Weft direction | Density (yarns per inch) | 20 | 20 | 15 | 10 | 28 | 12 | |
| | | Tensile strength (N/5cm) | 1200 | 1200 | 930 | 620 | 3050 | 700 | |
| | | Tensile elongation (%) | 135 | 138 | 139 | 135 | 40 | 137 | |
| | | Stress at 10% elongation (N per 5cm width) | 300 | 300 | 220 | 150 | 760 | 190 | |
| | | Elongation recovery factor (%) | 85 | 84 | 85 | 84 | 65 | 84 | |
| ST1/ST2 | | | 2.5 | 2.5 | 4.4 | 5.8 | 1.0 | 2.2 | |
| Sliding resistance (N) | | | 41 | 26 | 21 | 36 | 0.6 | 20 | |

EP 1 302 578 B1

Table 2 (continued)

| | | Example 1B | Example 2B | Example 3B | Comparative Example 1B | Comparative Example 2B | Comparative Example 3B | Comparative Example 4B |
|---|---|---|---|---|---|---|---|---|
| Sitting performance | Sinking amount (mm) | 30 | 31 | 34 | 40 | 21 | 46 | 40 |
| | Feeling | A | A | A | B | D | B | B |
| | Recovery from wrinkles | A | A | A | D | D | A | A |
| Air permeability | Air permeability (cc/cm$^2 \cdot$ sec) | 272 | 243 | 226 | 342 | 60 | 850 | 20 |
| Feeling of stickiness | | A | A | A | A | A | B | C |

EP 1 302 578 B1

Example 1C

A woven fabric of plain weave was produced using a 2080 dtex elastic yarn at a density of 20 yarns per inch as the weft, and a 830dtex polyester multifilament yarn at a density of 28 yarns per inch as the warp; the elastic yarn had a polyether-ester-based elastomer of melting point 222°C as a core component, and a polyether-ester-based elastomer of melting point 182°C as a sheath component, with the weight ratio of the core to the sheath being 80:20. Dry heat treatment was carried out on the woven fabric at 200°C for 1 minute.

It was verified that in the woven fabric after the heat treatment the low-melting-point polyether-ester-based elastomer had bonded and solidified at parts where the warp and the weft intersect in the woven fabric.

Moreover, the feeling when seated for the sample after the heat treatment was extremely good, and there were no wrinkles after sitting; the sample could thus be satisfactorily used as a seat cushioning material for office chairs, household chairs, seats for automobiles or trains, and so on. The details of the yarns, the physical properties of the woven fabric, and the performance are shown in Table 3.

Example 2C

Testing was carried out as in Example 1C, except that the weave of the woven fabric was made to be a 2/1 twill weave. The feeling when seated for the sample after the heat treatment was extremely good, and there were no wrinkles after sitting; the samplecouldthusbe satisfactorilyusedasa seat cushioning material for office chairs, household chairs, seats for automobiles or trains, and so on. The details of the yarns, the physical properties of the woven fabric, and the performance are shown in Table 3.

Example 3C

Testing was carried out as in Example 2C, except that the density of the warp in the woven fabric was made to be 36 yarns per inch and the density of the weft was made to be 15 yarns per inch. The feeling when seated for the sample after the heat treatment was extremely good, and there were no wrinkles after sitting; the sample could thus be satisfactorily used as a seat cushioning material for office chairs, household chairs, seats for automobiles or trains, and so on. The details of the yarns, the physical properties of the woven fabric, and the performance are shown in Table 3.

Example 4C

Chairs were manufactured by using the woven fabrics of Examples 1C to 3C as seats, and integrally molding with a polyester resin seat frame and backrest using an approximately quadrangular mold surrounded on all four sides. The chairs manufactured were light and easily carried. Moreover, comparing with a conventional chair in which urethane is used for both the seat and the back, it was found that due to the lack of thickness, sufficient seating space could be obtained even in a cramped indoor environment. Furthermore, the feeling when seated was extremely pleasant, with there being a suitable degree of sinking, and with there being no feeling of stickiness even during use in a high-temperature, high-humidity environment; it was found that the elastic woven fabrics according to the present invention have an excellent performance as a chair-covering fabric or a cushioning material, and moreover that seats using these elastic woven fabrics can be used with office chairs, household chairs, seats for transportation machinery such as automobiles and trains, wheelchair seats, child seats, nursing chairs, bench seats, folding chairs, and so on.

Comparative Example 1C

Testing was carried out as in Example 1C, except that the density of the warp in the woven fabric was made to be 32 yarns per inch and the density of the weft was made to be 10 yarns per inch. For the sample after the heat treatment, the feeling was normal, possibly because the sinking amount during sitting was somewhat high, but wrinkles clearly remained after sitting. The sample was thus unsuitable as a seat cushioning material for office chairs, household chairs, seats for automobiles or trains, and so on. The details of the yarns, the physical properties of the woven fabric, and the performance are shown in Table 3.

Comparative Example 2C

A plain woven fabric was produced using 830dtex polyester at a density of 28 yarns per inch as both the warp and the weft, and testing was carried out as in Example 1C. The feeling when seated was extremely poor, possibly because the sinking amount was extremely low, and moreover there were wrinkles in the fabric after sitting; the fabric was thus unsuitable as a seat cushioning material for office chairs, household chairs, seats for automobiles or trains, and so on. The details of the yarns, the physical properties of the woven fabric, and the performance are shown in Table 3.

The following were found from the results for the examples and the comparative examples. The woven fabric in each of Examples 1C to 3C was a woven fabric that uses an elastic yarn comprising two polyether-ester-based elastomers having different melting points to one another as the weft and a polyester yarn as the warp, and for which yarn fixing was carried out by carrying out dry heat treatment, and was designed such that ST1/ST2 is not more than 5. These fabrics used in the examples had a suitable hardness and sinking amount, and the elongation recoverability was satisfactory. Moreover, there was sliding resistance, there was no fraying or yarn slippage, and the feeling when seated was excellent, and hence these woven fabrics satisfied all of the properties required of a cushioning material.

As with the examples, the woven fabric of Comparative Example 1C was a woven fabric that uses an elastic yarn comprising two polyether-ester-based elastomers having different melting points to one another as the weft and a polyester yarn as the warp, and for which yarn fixing was carried out by carrying out dry heat treatment, but was designed such that ST1/ST2 was greater than 5. The sinking amount for this fabric was somewhat high, and the feeling was not necessarily good. Moreover, wrinkles arose while sitting, and hence it was found that the fabric was unsuitable as a cushioning material.

With Comparative Example 2C, a polyester yarn was used as both the warp and the weft, and hence the stress at 10% elongation exceeded 600N per 5cmwidth in both the warp direction and the weft direction. The sinking amount for this fabric was extremely low, and hence the feeling was extremely poor. Moreover, wrinkles arose while sitting, and hence it was found that the fabric is unsuitable as a cushioning material.

Table 3

| | | Example 1C | Example 2C | Example 3C | Comparative Example 1C | Comparative Example 2C |
|---|---|---|---|---|---|---|
| Warp | Type | Polyester yarn | Polyester yarn | Polyester yarn | Polyester yarn | Polyester yarn |
| | Fineness (dtex) | 830 | 830 | 830 | 830 | 830 |
| | Number of filaments | 70 | 70 | 70 | 70 | 70 |
| | Strength (cN/dtex) | 8.8 | 8.8 | 8.8 | 8.8 | 8.8 |
| | Elongation (%) | 20 | 250 | 20 | 20 | 20 |
| Weft | Type | Polyether-ester-based elastic yarn | Polyether-ester-based elastic yarn | Polyether-ester-based elastic yarn | Polyether-ester-based elastic yarn | Polyester yarn |
| | Composite structure | Core-sheath (80:20) | Core-sheath (80:20) | Core-sheath (80:20) | Core-sheath (80:20) | None |
| | Fineness (dtex) | 2080 | 2080 | 2080 | 2080 | 830 |
| | Number of filaments | 1 | 1 | 1 | 1 | 70 |
| | Strength (cN/dtex) | 2.1 | 2.1 | 2.1 | 2.1 | 8.8 |
| | Elongation (%) | 120 | 120 | 120 | 120 | 20 |

EP 1 302 578 B1

Table 3 (continued)

| | | | Example 1C | Example 2C | Example 3C | Comparative Example 1C | Comparative Example 2C |
|---|---|---|---|---|---|---|---|
| Woven fabric | | Weave | Plain | 2/1 twill | 2/1 twill | Plain | Plain |
| | Warp direction | Density (yarns per inch) | 28 | 28 | 36 | 32 | 28 |
| | | Tensile strength (N/5cm) | 1180 | 1200 | 1510 | 1350 | 1180 |
| | | Tensile elongation (%) | 40 | 43 | 42 | 40 | 40 |
| | | Stress at 10% elongation (N per 5cm width) | 760 | 760 | 970 | 870 | 760 |
| | | Elongation recovery factor (%) | 65 | 63 | 64 | 64 | 65 |
| | Weft direction | Density (yarns per inch) | 20 | 20 | 15 | 10 | 28 |
| | | Tensile strength (N/5cm) | 1200 | 1200 | 1200 | 1200 | 1180 |
| | | Tensile elongation (%) | 135 | 138 | 139 | 135 | 40 |
| | | Stress at 10% elongation (N per 5cm width) | 300 | 300 | 220 | 150 | 760 |
| | | Elongation recovery factor (%) | 85 | 84 | 85 | 84 | 65 |
| | ST1/ST2 | | 2.5 | 2.5 | 4.4 | 5.8 | 1.0 |
| | Sliding resistance (N) | | 41 | 26 | 21 | 36 | 0.6 |
| Sitting performance | Sinking amount (mm) | | 30 | 31 | 34 | 40 | 21 |
| | Feeling | | A | A | A | B | D |
| | Recovery from wrinkles | | A | A | A | D | D |

EP 1 302 578 B1

According to the present invention, an elastic woven or knitted fabric can be obtained that exhibits excellent elasticity and elastic recoverability with no yarn slippage, and is ideal as a cushioning material.

Moreover, according to the present invention, an elastic woven or knitted fabric can be obtained that exhibits excellent elasticity and elastic recoverability with no yarn slippage, gives no feeling of stickiness even upon sitting for a prolonged time, and is ideal as a cushioning material.

**Claims**

1. An elastic woven or knitted fabric that has an elastic yarn comprising an aromatic polyester having an aromatic carboxylic acid and a glycol as principal raw materials, the aromatic polyester being disposed in at least part of the elastic yarn, and has the following physical properties:

   (1) a stress at 10% elongation in a range of 100 to 600N per 5cm width in at least one of a warp direction and a weft direction, and an elongation recovery factor at 15% elongation of at least 75% in the same direction;
   (2) a ratio ST1/ST2 of not more than 5, where ST1 is the stress at 10% elongation in one of the warp direction and weft direction, and ST2 is the stress at 10% elongation in the other one of the warp direction and weft direction, with the proviso that ST1≥ST2; and
   (3) a dry heat shrinkage factor at 180°C in a range of 1.0% to 10% in each of the warp direction and the weft direction.

2. The elastic woven or knitted fabric according to claim 1, further having the following physical property:

   (4) an air permeability upon passing through air at a pressure of 125Pa in a range of 100 to 700cc/cm$^2$·sec.

3. The elastic woven or knitted fabric according to claim 1 or 2, the elastic yarn comprising at least two polyether-ester-based elastomers having melting points differing by at least 30°C, wherein the melting point of the polyether-ester-based elastomer having a lower melting point is at least 100°C.

4. The elastic woven or knitted fabric according to any of claims 1 to 3, wherein the breaking strength is at least 250N per 5cm width in each of the warp direction and the weft direction.

5. The elastic woven or knitted fabric according to any of claims 1 to 4, wherein the sliding resistance of the elastic yarn comprising the organic synthetic macromolecule is at least 2N.

6. The elastic woven or knitted fabric according to any of claims 1 to 5, wherein the elastic yarn comprising the organic synthetic macromolecule is a monofilament.

7. A method of manufacturing an elastic woven or knitted fabric, comprising the steps of:

   carrying out knitting or weaving disposing in at least part an elastic yarn comprising at least two polyether-ester-based elastomers having different melting points to one another to obtain a woven or knitted fabric; and
   then carrying out heat treatment of the woven or knitted fabric at a temperature at which a low-melting-point polyether-ester-based elastomer component softens or melts, wherein the overfeed factor and width variation factor are set in the following ranges:

$$1.5 \leq ((SH1) - (\text{overfeed factor})) \leq 15$$

$$1.5 \leq ((SH2) - (\text{width variation factor})) \leq 15$$

   wherein SH1 represents the dry heat shrinkage factor at 180°C in the warp direction when the woven or knitted fabric is unconstrained and SH2 represents the dry heat shrinkage factor at 180°C in the weft direction when the woven or knitted fabric is unconstrained;
   whereby a woven or knitted fabric having the following physical properties is obtained:

(1) a stress at 10% elongation in a range of 100 to 600N per 5cm width, and an elongation recovery factor at 15% elongation of at least 75%, in at least one of a warp direction and a weft direction;

(2) a ratio ST1/ST2 of not more than 5, wherein ST1 is the stress at 10% elongation in one of the warp direction and weft direction, and ST2 is the stress at 10% elongation in the other one of the warp direction and weft direction, with the proviso that ST1≥ST2; and

(3) a dry heat shrinkage factor at 180°C in a range of 1.0% to 10% in each of the warp and weft directions.

**8.** The method of manufacturing an elastic woven or knitted fabric according to claim 7, wherein a low-melting-point polyether-ester-based elastomer resin fuses and hardens through the heat treatment at parts of the woven or knitted fabric where the yarns intersect.

**9.** The method of manufacturing an elastic woven or knitted fabric according to claim 7 or 8, wherein the content in the woven or knitted fabric of the elastic yarn comprising the polyether-ester-based elastomers is at least 25wt%.

**10.** The method of manufacturing an elastic woven or knitted fabric according to any of claims 7 to 9, wherein the elastic yarn comprising the polyether-ester-based elastomers has a core-sheath structure, and the melting point of a core component polyether-ester-based elastomer is at least 30°C higher than the melting point of a sheath component polyether-ester-based elastomer.

**11.** The method of manufacturing an elastic woven or knitted fabric according to claim 10, wherein the weight ratio of the core component to the sheath component is in a range of 95:5 to 30:70.

**12.** A seat cushioning material that uses the elastic woven or knitted fabric according to any of claims 1 to 6.

**13.** A seat that uses the cushioning material according to claim 12.


**Patentansprüche**

**1.** Elastisches gewebtes oder gestricktes Material, das einen elastischen Faden aufweist, der einen aromatischen Polyester mit einer aromatischen Carbonsäure und einem Glycol als Hauptausgangsmaterialien umfasst, wobei der aromatische Polyester in mindestens einem Teil des elastischen Fadens angeordnet ist, und das die folgenden physikalischen Eigenschaften aufweist:

(1) eine Spannung bei 10%iger Dehnung in einem Bereich von 100 bis 600 N pro 5 cm Breite in mindestens einer Richtung ausgewählt aus der Kettrichtung und der Schussrichtung, und einen Dehnungserholungsfaktor bei 15%iger Dehnung von mindestens 75% in der selben Richtung;

(2) ein Verhältnis ST1/ST2 von nicht mehr als 5, wobei ST1 die Spannung bei 10% Dehnung in einer Richtung ausgewählt aus der Kettrichtung und der Schussrichtung und ST2 die Spannung bei 10% Dehnung in der anderen Richtung ausgewählt aus der Kettrichtung und der Schussrichtung ist, mit der Maßgabe, dass ST1 ≥ ST2; und

(3) einen Schrumpfungsfaktor beim trockenen Erwärmen bei 180°C in einem Bereich von 1,0% bis 10% jeweils in der Kettrichtung und der Schussrichtung.

**2.** Elastisches gewebtes oder gestricktes Material nach Anspruch 1, das ferner die folgende physikalische Eigenschaft aufweist:

(4) eine Luftdurchlässigkeit beim Durchströmen von Luft bei einem Druck von 125 Pa in einem Bereich von 100 bis 700 $cm^3/cm^2 \cdot sec$.

**3.** Elastisches gewebtes oder gestricktes Material nach Anspruch 1 oder 2, wobei der elastische Faden mindestens zwei Elastomere auf Polyetherester-Basis umfasst, deren Schmelzpunkte sich um mindestens 30°C unterscheiden, wobei der Schmelzpunkt des Elastomers auf Polyetherester-Basis mit einem niedrigeren Schmelzpunkt mindestens 100°C beträgt.

**4.** Elastisches gewebtes oder gestricktes Material nach einem der Ansprüche 1 bis 3, wobei die Reißfestigkeit mindestens 250 N pro 5 cm Breite in jeweils der Kettrichtung und der Schussrichtung beträgt.

5. Elastisches gewebtes oder gestricktes Material nach einem der Ansprüche 1 bis 4, wobei der Gleitwiderstand des elastischen Fadens, der das organische synthetische Makromolekül umfasst, mindestens 2 N beträgt.

6. Elastisches gewebtes oder gestricktes Material nach einem der Ansprüche 1 bis 5, wobei der elastische Faden, der das organische synthetische Makromolekül umfasst, ein Monofilament ist.

7. Verfahren zur Herstellung eines elastischen gewebten oder gestrickten Materials, umfassend die Schritte:

Durchführen von Anordnen durch Stricken oder Weben mindestens teilweise eines elastischen Fadens, der mindestens zwei Elastomere auf Polyetherester-Basis mit verschiedenen Schmelzpunkten umfasst, um ein gewebtes oder gestricktes Material zu erhalten; und
anschließend Durchführen einer Wärmebehandlung des gewebten oder gestrickten Materials bei einer Temperatur, bei der eine Elastomerkomponente auf Polyetherester-Basis mit niedrigem Schmelzpunkt erweicht oder schmilzt, wobei der Vorlauffaktor (engl.: overfeed factor) und der Breitenvariationsfaktor (engl.: width variation factor) in den folgenden Bereichen eingestellt sind:

$$1,5 \leq ((SH1) - (Vorlauffaktor)) \leq 15$$

$$1,5 \leq ((SH2) - (Breitenvariationsfaktor)) \leq 15$$

wobei SH1 den Schrumpfungsfaktor beim trockenen Erwärmen bei 180°C in der Kettrichtung bedeutet, wenn das gewebte oder gestrickte Material nicht gespannt ist, und SH2 den Schrumpfungsfaktor beim trockenen Erwärmen bei 180°C in der Schussrichtung bedeutet, wenn das gewebte oder gestrickte Material nicht gespannt ist;
wobei ein gewebtes oder gestricktes Material mit den folgenden physikalischen Eigenschaften erhalten wird:

(1) eine Spannung bei 10%iger Dehnung in einem Bereich von 100 bis 600 N pro 5 cm Breite, und ein Dehnungserholungsfaktor bei 15%iger Dehnung von mindestens 75% in mindestens einer Richtung ausgewählt aus der Kettrichtung und der Schussrichtung,
(2) ein Verhältnis ST1/ST2 von nicht mehr als 5, wobei ST1 die Spannung bei 10% Dehnung in einer Richtung ausgewählt aus der Kettrichtung und der Schussrichtung, und ST2 die Spannung bei 10% Dehnung in der anderen Richtung ausgewählt aus der Kettrichtung und der Schussrichtung ist, mit der Maßgabe, dass ST1 $\geq$ ST2; und
(3) ein Schrumpfungsfaktor beim trockenen Erwärmen bei 180°C in einem Bereich von 1,0% bis 10% jeweils in der Kett- und der Schussrichtung.

8. Verfahren zur Herstellung eines elastischen gewebten oder gestrickten Materials nach Anspruch 7, wobei ein Elastomerharz auf Polyetherester-Basis mit niedrigem Schmelzpunkt durch die Wärmebehandlung an Teilen des gewebten oder gestrickten Materials, wo die Fäden kreuzen, schmilzt und härtet.

9. Verfahren zur Herstellung eines elastischen gewebten oder gestrickten Materials nach Anspruch 7 oder 8, wobei der Gehalt an dem elastischen Faden, umfassend die Elastomere auf Polyetherester-Basis, in dem gewebten oder gestrickten Material mindestens 25 Gew.-% beträgt.

10. Verfahren zur Herstellung eines elastischen gewebten oder gestrickten Materials nach einem der Ansprüche 7 bis 9, wobei der elastische Faden, umfassend die Elastomere auf Polyetherester-Basis, eine Kern-Hüllestruktur aufweist, und der Schmelzpunkt eines Elastomers auf Polyetherester-Basis als Kemkomponente mindestens 30°C höher als der Schmelzpunkt eines Elastomers auf Polyetherester-Basis als Hüllekomponente ist.

11. Verfahren zur Herstellung eines elastischen gewebten oder gestrickten Materials nach Anspruch 10, wobei das Gewichtsverhältnis der Kernkomponente zu der Hüllekomponente in einem Bereich von 95:5 bis 30:70 liegt.

12. Sitzpolstermaterial, das das elastische gewebte oder gestrickte Material nach einem der Ansprüche 1 bis 6 verwendet.

**13.** Sitz, der das Polstermaterial nach Anspruch 12 verwendet.

**Revendications**

**1.** Tissu ou tricot élastique qui a un fil élastique comprenant un polyester aromatique ayant un acide carboxylique aromatique et un glycol comme matières premières principales, le polyester aromatique étant disposé dans au moins une partie du fil élastique, et ayant les propriétés physiques suivantes :

(1) une contrainte à 10 % d'allongement dans une plage de 100 à 600 N pour 5 cm de largeur dans au moins une direction parmi une direction de fil de chaîne et une direction de fil de trame et un facteur de récupération de l'allongement à 15 % d'allongement d'au moins 75 % dans la même direction ;
(2) un rapport ST1/ST2 de pas plus de 5, où ST1 est la contrainte à 10 % d'allongement dans l'une de la direction de fil de chaîne et de la direction de fil de trame, et ST2 est la contrainte à 10 % d'allongement dans l'autre de la direction de fil de chaîne et de la direction de fil de trame, à la condition que ST1 ≥ ST2 ; et
(3) un facteur de thermorétrécissement à sec à 180°C dans une plage de 1,0 % à 10 % dans chacune des directions de fil de chaîne et de fil de trame.

**2.** Tissu ou tricot élastique selon la revendication 1, ayant en outre la propriété physique suivante :

(4) une perméabilité à l'air lors du passage à travers l'air à une pression de 125 Pa dans une plage de 100 à 700 cc/cm$^2$.sec.

**3.** Tissu ou tricot élastique selon la revendication 1 ou 2, le fil élastique comprenant au moins deux élastomères à base d'ester de polyéther ayant des points de fusion différents d'au moins 30°C, dans lequel le point de fusion de l'élastomère à base d'ester de polyéther ayant un point de fusion inférieur est d'au moins 100°C.

**4.** Tissu ou tricot élastique selon l'une quelconque des revendications 1 à 3, dans lequel la résistance à la rupture est d'au moins 250 N pour 5 cm de largeur dans chacune des directions du fil de chaîne et du fil de trame.

**5.** Tissu ou tricot élastique selon l'une quelconque des revendications 1 à 4, dans lequel la résistance au glissement du fil élastique comprenant la macromolécule synthétique organique est d'au moins 2 N.

**6.** Tissu ou tricot élastique selon l'une quelconque des revendications 1 à 5, dans lequel le fil élastique comprenant la macromolécule synthétique organique est un monofilament.

**7.** Procédé de fabrication d'un tissu ou tricot élastique, comprenant les étapes consistant à :

➢ réaliser le tricotage ou le tissage en disposant dans au moins une partie un fil élastique comprenant au moins deux élastomères à base d'ester de polyéther ayant différents points de fusion l'un sur l'autre pour obtenir un tissu ou un tricot ; et
➢ puis, réaliser un traitement thermique du tissu ou tricot à une température à laquelle un composant élastomère à base d'ester de polyéther à bas point de fusion ramollit ou fond, dans lequel le facteur de surcharge et le facteur de variation de la largeur sont paramétrés dans les plages suivantes :

➢ 1,5 ≤ ((SH1) - (facteur de surcharge)) ≤ 15
➢ 1,5 ≤ ((SH2) - (facteur de variation de la largeur)) ≤ 15

où SH1 représente le facteur de thermorétrécissement à sec à 180°C dans la direction du fil de chaîne quand le tissu ou le tricot est non contraint et SH2 représente le facteur de thermorétrécissement à sec à 180°C dans la direction du fil de trame quand le tissu ou le tricot est non contraint ;
moyennant quoi un tissu ou un tricot ayant les propriétés physiques suivantes est obtenu :

(1) une contrainte à 10 % d'allongement dans une plage de 100 à 600 N pour 5 cm de largeur, et un facteur de récupération de l'allongement à 15 % d'allongement d'au moins 75 %, dans au moins une des directions du fil de chaîne et du fil de trame ;
(2) un rapport ST1/ST2 de pas plus de 5, où ST1 est la contrainte à 10 % d'allongement dans l'une de la direction de fil de chaîne et de la direction de fil de trame, et ST2 est la contrainte à 10 % d'allongement dans l'autre de la direction de fil de chaîne et de la direction de fil de trame, à la condition que ST1 ≥ ST2 ; et (3) un facteur de thermorétrécissement à sec à 180°C dans une plage de 1,0 % à 10 % dans chacune des directions du fil de chaîne et du fil de trame.

8. Procédé de fabrication d'un tissu ou d'un tricot élastique selon la revendication 7, où une résine élastomère à base d'ester de polyéther à bas point de fusion fond et durcit grâce au traitement thermique sur des parties du tissu ou du tricot où les fils se croisent.

9. Procédé de fabrication d'un tissu ou tricot élastique selon la revendication 7 ou 8, dans lequel la teneur dans le tissu ou tricot en fil élastique comprenant les élastomères à base d'ester de polyéther est d'au moins 25 % en poids.

10. Procédé de fabrication d'un tissu ou tricot élastique selon l'une quelconque des revendications 7 à 9, dans lequel le fil élastique comprenant les élastomères à base d'ester de polyéther possède une structure noyau - gaine et le point de fusion d'un composant de noyau élastomère à base d'ester de polyéther est d'au moins 30°C supérieur au point de fusion d'un composant de gaine élastomère à base d'ester de polyéther.

11. Procédé de fabrication d'un tissu ou d'un tricot élastique selon la revendication 10, dans lequel le rapport en poids du composant de noyau sur le composant de gaine est dans une plage de 95/5 à 30/70.

12. Matériau de rembourrage de siège qui utilise le tissu ou le tricot élastique selon l'une des revendications 1 à 6.

13. Siège qui utilise le matériau de rembourrage selon la revendication 12.